(19) **Europäisches Patentamt**

**European Patent Office**

**Office européen des brevets**

(11) **EP 0 976 920 A2**

(12) **EUROPEAN PATENT APPLICATION**

(43) Date of publication:
02.02.2000 Bulletin 2000/05

(51) Int. Cl.$^7$: **F02D 19/02**

(21) Application number: **99110720.2**

(22) Date of filing: **04.06.1999**

(84) Designated Contracting States:
**AT BE CH CY DE DK ES FI FR GB GR IE IT LI LU MC NL PT SE**
Designated Extension States:
**AL LT LV MK RO SI**

(30) Priority: **31.07.1998 IT VI980145**

(71) Applicant:
**Officine Lovato S.P.A.
36100 Vicenza (IT)**

(72) Inventors:
• **Padoan, Federico
36026 Pojana Maggiore (Vicenza) (IT)**
• **Zanini, Pierluigi
36100 Vicenza (IT)**

(74) Representative:
**Bettello, Pietro, Dott. Ing. et al
Studio Tecnico
Ingg. Luigi e Pietro Bettello
Via Col d'Echele, 25
36100 Vicenza (IT)**

(54) **A group for the regulation of feeding a gaseous fuel for injection in engines having internal combustion**

(57) An engine having internal combustion is provided with a group of regulation of the feeding of gaseous fuel of the type GPL. The group of regulation is mounted on an installation for the injection of the fuel. This group contains two small engines operating step-by-step "passo-passo" (8.1) and (8.2) to carry out the action of regulation of the gaseous flow.

FIG. 1

EP 0 976 920 A2

**Description**

FIELD OF THE INVENTION

The present invention relates to a group of regulation of the feeding of a gaseous fuel such as GPL (a gas from liquefied petroleum) and other similar combustibles applied on the installation of injection of the combustible of an engine having internal combustion as described in the general part of claim 1.

BACKGROUND OF THE PRIOR ART

It is known that in autovehicles provided with an installation for autotraction called with a gas, there is inserted between the reservoir which contains the combustible and the engine which has several cylinders a circuit of injection and regulation of the combustible which comprises substantially a vaporizer/regulator of the pressure which is capable of converting the combustible from the liquid state to the gaseous state and a regulator of the pressure with a diaphram capable of maintaining almost constant the value of the pressure of the gas in the injection pipes as well as being capable of distributing the gas to the cylinders of the engine by means of suitable tuyeres and nozzles which are connected to the collector for the admission of air corresponding to each inlet valve.

The injection circuit is completed with the insertion of measuring means which regulate the flow of the fuel from the central feeding tuyere to the plurality of collectors, each of which is present at the intake of a cylinder, an electronic switchboard which performs the function of the entire installation on the basis of a predetermined map of the behavior of the engine and a commutator gas/benzene which commutates the passage from benzene, for instance to GPL and vice versa and therefore active/deactive, consequently the above mentioned electronic switchboard for a functioning with a gas.

At the present state of the art several systems and devices are known to regulate the injection of the gaseous fuel, for instance, European Patent 0 563 223, which describes measuring means provided with separate measuring openings, each opening belonging to a cylinder and being connected to that cylinder by means of a separate tuyere.

SUMMARY OF THE INVENTION

An object of the invention is to provide a group of regulation of the gaseous fuel superior with respect to similar known devices and in particular constituted by a reduced number of components so that the installation and the calibration are easier and also a device which offers the possibility of regulating the delivery of the fuel known as "raffinata" (refined) in all the conditions of operation of an internal combustion engine.

Essentially this object is achieved by providing that the delivery and the control of the flow of the gas which is delivered to the engine occurs by means of two small engines step- by-step "passo-passo" inserted between the vaporizer/reducer of the pressure and the regulator of the pressure as well as mainly that the two small engines are part of the body or the frame of the above mentioned vaporizer/reducer. In more detail, the two small engines operating step-by-step are qualified to function in parallel and exactly the first small engine operating step-by-step has the function of regulating the functioning in the operation of functioning called "al minimo" of the internal combustion engine and the second small engine operating step-by-step has the function of regulating the flow of the combustible gas during the functioning in normal operation "normale" that is outside of the above mentioned operation "al minimo" and the second small engine operates together with the above mentioned first small engine which provides for the control of the efficiency of the combustion by using the signals of the probe "lambda" already placed in the benzene installation.

The two small engines operating step-by-step are of known construction but it is preferred if the shape of execution provides that they result to be contained within the body of the reducer/vaporizer and that the opening of the passage be controlled by means of an obturator having a profile essentially conical.

The management of the two small engines operating step-by-step obviously is of the electronic type and is carried out by means of the signals delivered by a suitable electronic switchboard referred to as "del gas", which elaborates the injection signal delivered by the switchboard "a benzine" together with other signals provided directly on the engine.

Laboratory tests and actual experiments carried out on the road have brought to the recognition of the function of transfer which permits to transform by moans of the switchboard operating with a gas the impulse of the injection delivered by the switchboard "a benzine" in steps of opening of the small engine step-by-step which regulates the flow of the gas at normal operation of the engine expressed by the formula

$$X = f(T, F, K)$$

in which X is equal to the number of steps of opening of the small engine step-by-step which controls the functioning in the state of normal operation;

T      is the period of time of the injection;

F      is the frequency of the injection;

K      is the parameter connected with the specific series of the internal combustion engine on which the installation operating with a gas is applied which is the subject matter of the present invention and which is defined by the people who build the same installation.

The novel features of the present invention will be more evident by reference to the attached drawings which represent a possible embodiment of the invention and are provided by way of illustration and are not intended to be limiting, in which

FIG. 1 -     represents a scheme of the installation in blocks with the regulation group of the present invention;

FIG. 2 -     illustrates a scheme of functioning of the installation with gaseous injection according to the invention;

FIG. 3 -     represents an overall view of the main components of the installation with the particular location of the two small engines operating step-by-step of the present invention.

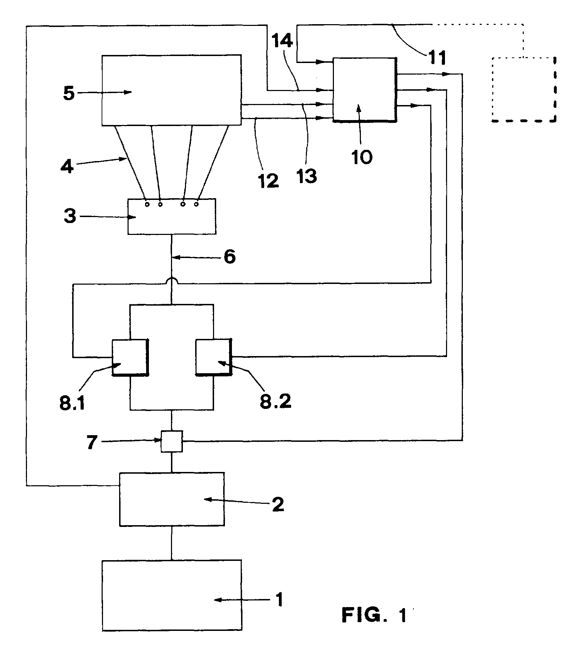

As shown in Fig. 1, the reservoir of gas (1) is connected to the vaporizer/reducer of the pressure (2) which in turn is connected to the pressure regulator (3) from which by means of the injection tuyeres (4) the gas enters in the cylinders of the engine (5).

Numeral (6) designates a conduit of connection between the vaporizer/reducer and the pressure regulator (3) and in this conduit (6) is inserted an electrovalve of safety (7). The group of regulation of the feeding of the gas is constituted by the pair of small engines operating step-by-step (8.1) and (8.2) which are arranged parallel to one another and with respect to the same conduit and function alternatively. Respectively, the small engine step-by-step (8.1) regulates the flow of the fuel during the functioning of engine (6) in the conditions of "al minimo" functioning while the other small motor operating step-by-step (8.2) regulates the flow in other situations when the engine functions at normal operation coupled with the first small engine (8.1).

The activation and the control of the two small engines (8.1) and (8.2) in addition to other apparatuses which form the installation for a gas as the safety electrovalve (7) is carried out by means of an electronic switchboard (10) called "del gas", which receives the signal of injection (11) delivered by the electronic switchboard of the functioning with benzene and elaborates the signals together with other signals which come from the outside such as, for instance, the signals related to the angular position of the throttle (12), the signal "lambda" (13) and the temperature of the gas (14).

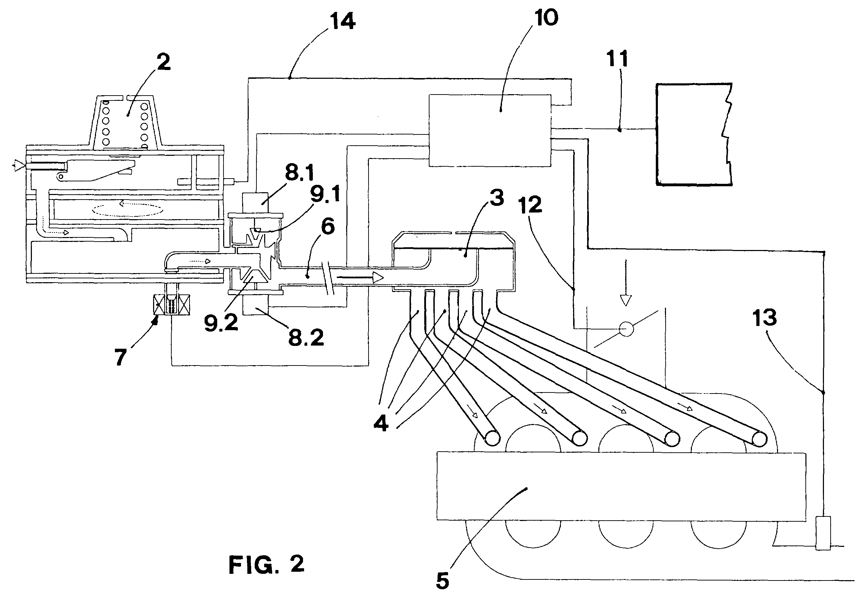

As shown in Fig. 2, the two small engines operating step-by-step (8.1) and (8.2) are applied on the body of the reducer/vaporizer (2) and act on the openings of passage of conduit (6) by means of obturators (9.1) and (9.2) which have essentially a conical cross section.

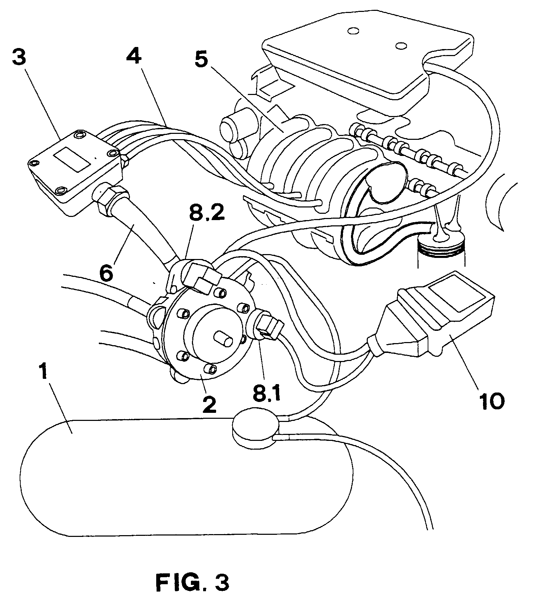

Fig. 3 shows the main components of the installation operating with a gas and also the particular location of the two small engines operating step-by-step (8.1) and (8.2) which advantageously are applied on the body of the vaporizer/reducer of pressure (2) in a manner to form a single block.

**Claims**

1.   A group of regulation of the feeding a gaseous fuel of the type GPL (gas from liquefied petroleum) and other similar fuels, said group being mounted on an installation for injecting the fuel in an engine operating with internal combustion (5) said group comprising substantially a vaporizer/reducer of pressure (2), said vaporizer/reducer of pressure being connected to a regulator of pressure (3) from which the gas enters in the cylinders of the engine by means of tuyeres of injection (4), a safety electrovalve (7) and an electronic switchboard (10), said group of regulation being characterized by the fact that the action of regulation of the gaseous flow is obtained by the action of two small engines operating step-by-step (8.1) and (8.2), said two small engines being provided with obturators (9.1) and (9.2), said obturators regulating the flow of the fuel on conduit (6), said conduit connecting the vaporizer/reducer (2) to the regulator of pressure (3), said two small engines (8.1) and (8.2) operating in parallel and parallel to conduit (6), one of said small engines (8.1) operating step-by-step to regulate the flow of the gas when the engine (5) functions "al minimo" and providing the control of the combustion using the signals of the "lambda", the second small engine (8.2) operating step-by-step to regulate the flow of the gas when the engine functions in a normal operation, said second small engine being coupled with the functioning of said first small engine (8.1).

2.   The group of regulation according to claim 1, characterized by the fact that said two small engines operating step-by-step are applied on the body of said reducer/vaporizer (2).

3.   The group of regulation according to claim 1, characterized by the fact that said two small engines (8.1) and (8.2) are inserted in the interior of the body of said vaporizer/reducer of pressure (2) thus constituting a single block with said vaporizer/reducer.

4.   The group of regulation according to one or more of the preceding claims characterized by the fact that said small engines (8.1) and (8.2) are provided with said obturators (9.1) and (9.2) which have an essentially conical cross section.

5.   The group of regulation according to one or more of the preceding claims characterized by the fact that the opening steps of said second small engine (8.2) which regulates the flow of the gas when the engine (6) functions in a normal manner are derived by the transfer formula

$$X = f(T, F, K)$$

in which X is the number of steps of opening of the small engine which controls the function according to the normal operation, T is the period of time of the injection, F is the frequency of the injection, K is a parameter resulting from the specific series of the internal combustion engine on which said installation operating with a gas and defined by the builder of said installation.

6. The group of regulation according to one or more of the preceding claims characterized by the fact that the said two small engines operating step-by-step (8.1) and (8.2) are controlled by said electronic switchboard (10), said switchboard receiving the signal of injection (11), said signal of injection being delivered by said switchboard, which functions with benzene, said switchboard elaborating said signal together with other signals being emitted from the outside such as, for instance, the signal related to the angular position of said throttle (12), the signal "lambda" (13) and the temperature of the gas (14).

**FIG. 1**

EP 0 976 920 A2

FIG. 2

EP 0 976 920 A2

**FIG. 3**